## Europäisches Patentamt

(19) **European Patent Office**

**Office européen des brevets**

(11) Veröffentlichungsnummer: **0 141 951**
**B1**

# (12) EUROPÄISCHE PATENTSCHRIFT

(45) Veröffentlichungstag der Patentschrift:
**24.06.87**

(21) Anmeldenummer: **84110504.2**

(22) Anmeldetag: **04.09.84**

(51) Int. Cl.⁴: **B 65 G 47/88**, B 65 B 35/04

(54) **Vorrichtung zum Einführen von Gegenständen, insbesondere Packungen, in einen Packungs-Turm.**

(30) Priorität: **20.09.83 DE 3333884**

(43) Veröffentlichungstag der Anmeldung:
**22.05.85 Patentblatt 85/21**

(45) Bekanntmachung des Hinweises auf die Patenterteilung:
**24.06.87 Patentblatt 87/26**

(84) Benannte Vertragsstaaten:
**DE FR GB IT NL SE**

(56) Entgegenhaltungen:
**DE - A - 2 223 005**
**DE - B - 2 501 267**
**DE - C - 524 611**
**GB - A - 913 679**
**US - A - 1 467 020**

(73) Patentinhaber: **Focke & Co. (GmbH & Co.),**
**Siemensstrasse 10, D-2810 Verden (DE)**

(72) Erfinder: **Focke, Heinz, Moorstrasse 64, D-2810 Verden (DE)**
Erfinder: **Mutschall, Hugo, Deelsener Strasse 6, D-2816 Kirchlinteln (DE)**

(74) Vertreter: **Bolte, Erich, Dipl.-Ing., c/o Meissner & Bolte Patentanwälte Hollerallee 73, D-2800 Bremen (DE)**

**Beschreibung**

Die Erfindung betrifft eine Vorrichtung zum Ablenken von Gegenständen, insbesondere Packungen, gemäss dem Oberbegriff des Anspruchs 1.

In der Verpackungstechnik ergibt sich sehr häufig und in vielfältigem Zusammenhang die Notwendigkeit, Packungen, die auf einer Bahn zugeführt werden, in horizontaler oder vertikaler Richtung quer zu der Zuförderbahn abzulenken und weiterzutransportieren. Häufig ist dabei auch oder in erster Linie ein Niveauunterschied zu überwinden. Des weiteren wird in vielen Fällen in der Abförderbahn eine andere Relativstellung der Packungen in bezug auf die Förderrichtung verlangt als in der Zuförderbahn.

Aus der DE-OS 2 223 005 ist eine Vorrichtung bekannt, durch die horizontal anzufördernde Packungen in einen nach unten fortlaufenden Schacht einführbar sind. Zu diesem Zweck werden die angeförderten Gegenstände in längs des Umfangs einer umlaufenden Scheibe angeordnete Taschenelemente eingeführt und durch Drehbewegung der Scheibe bzw. der Taschenelemente übereinander gestapelt angelegt. Dabei müssen die Packungen mit hoher Genauigkeit in die Taschenelemente eingeführt werden. Ausserdem ist die Arbeitsgeschwindigkeit der bekannten Vorrichtung beschränkt, da ein sauberes Ablegen der Packungen übereinander ohne Verklemmung derselben im Stapelbehälter, -Turm oder dergleichen nur bei einer niedrigen Arbeitsgeschwindigkeit gewährleistet ist. Die Packungen müssen zudem in einer gegenüber der Waagerechten geneigten Position aus dem jeweiligen Taschenelement herausrutschen und anschliessend übereinander zu liegen kommen. Dadurch ist ein Verklemmen bei höheren Arbeitsgeschwindigkeiten leicht möglich.

Ausgehend davon liegt der vorliegenden Erfindung die Aufgabe zugrunde, eine Vorrichtung der eingangs genannten Art dahingehend weiterzubilden, dass eine erhöhte Arbeitsgeschwindigkeit bei gleichzeitig verringerter Störanfälligkeit erzielbar ist.

Diese Aufgabe wird erfindungsgemäss durch die kennzeichnenden Merkmale des Anspruchs 1 gelöst.

Der Erfindungsgedanke besteht demnach darin, die jeweils vordere, in den Packungsturm einzuschiebende Packung im Bereich des Eingangs des Packungsturms durch Seitenhalter in der Ebene der Zuförderbahn zu fixieren und dann durch eine Abwärtsbewegung der Anschlagscheibe aus den Seitenhaltern herauszuziehen und in den Packungsturm einzuführen. Ein wichtiges Merkmal der Erfindung besteht ausserdem darin, dass mehrere Anschläge mit Abstand voneinander längs des Umfangs einer Anschlagscheibe gleichmässig verteilt angeordnet sind.

Weitere erfindungswesentliche Merkmale der Vorrichtung beziehen sich auf die Gestaltung der Seitenhalter, der Anschläge sowie der Anschlagscheibe, auf den Antrieb derselben und auf die Ausgestaltung des Turms als bevorzugtes Ausführungsbeispiel einer aufrechten Weiterförderbahn. Ein Ausführungsbeispiel der Vorrichtung wird nachfolgend anhand der Zeichnungen näher erläutert. Es zeigen:

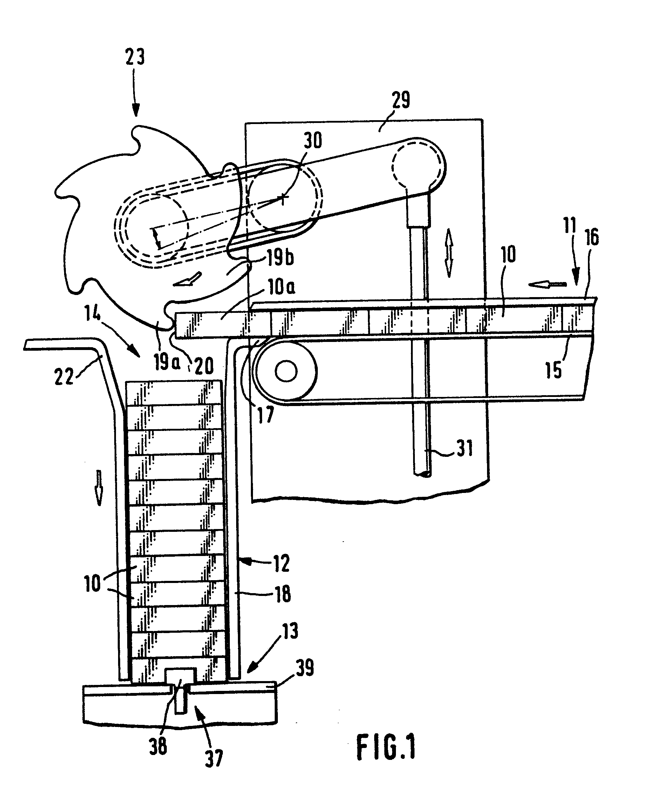

Fig. 1 die Vorrichtung in schematischer Seitenansicht,

Fig. 2 eine um 90° zu Fig. 1 versetzte Vorderansicht der Vorrichtung,

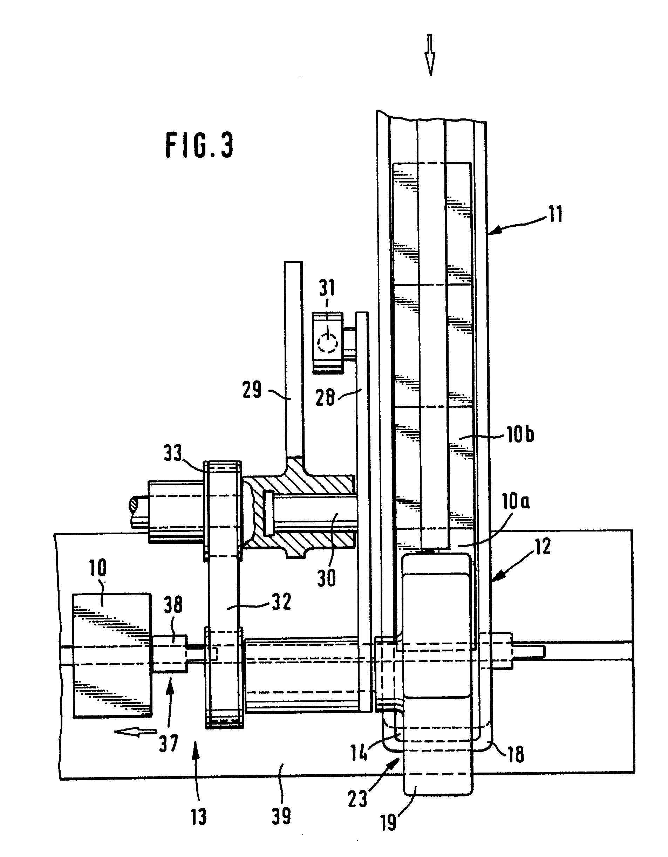

Fig. 3 einen Grundriss zu der Vorrichtung gemäss Fig. 1 und 2,

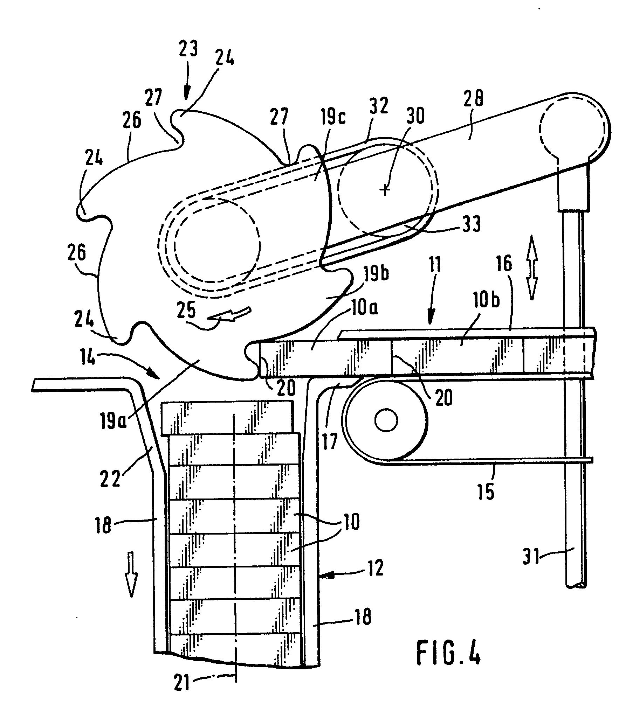

Fig. 4 eine Einzelheit der Vorrichtung in vergrössertem Massstab bei veränderter Relativstellung von Einzelteilen, bei vergrössertem Massstab,

Fig. 5 eine Darstellung entsprechend Fig. 4 bei nochmals veränderter Relativstellung der betreffenden Einzelteile.

In den Zeichnungen ist die bevorzugte Anwendungsform der Erfindung dargestellt. Es geht darum, quaderförmige Packungen 10, die längs einer Zuförderbahn 11 in Dichtlage angeliefert werden, in einen aufrechten Packungsturm 12 von oben her einzufördern. Die Packungen 10 sind demnach gegenüber der Transportrichtung im Bereich der Zuförderbahn 11 in Querrichtung abzulenken ohne Ausführung einer Drehbewegung, und zwar in Abwärtsrichtung. Am unteren Ende des Packungsturms 12 werden die Packungen 10 durch eine Abförderbahn 13 dem Packungsturm 12 entnommen und quer zum Packungsturm 12, nämlich wiederum in horizontaler Ebene, abgefördert. Die Transportrichtung der Abförderbahn 13 ist — im Grundriss gesehen — um 90° zur Zuförderbahn 11 gerichtet. Die Packungen 10 werden demnach nicht nur quer zu der ursprünglichen Förderrichtung weitertransportiert, sondern darüber hinaus durch den als Zwischen- bzw. Weiterförderer wirkenden Packungsturm 12 höhenmässig versetzt. Zum Einführen der Packungen 10 in den Packungsturm 12, nämlich in eine obere Eintrittsöffnung 14 desselben, werden besondere Massnahmen ergriffen, die eine einwandfreie Führung und Zentrierung der Packungen 10 gewährleisten.

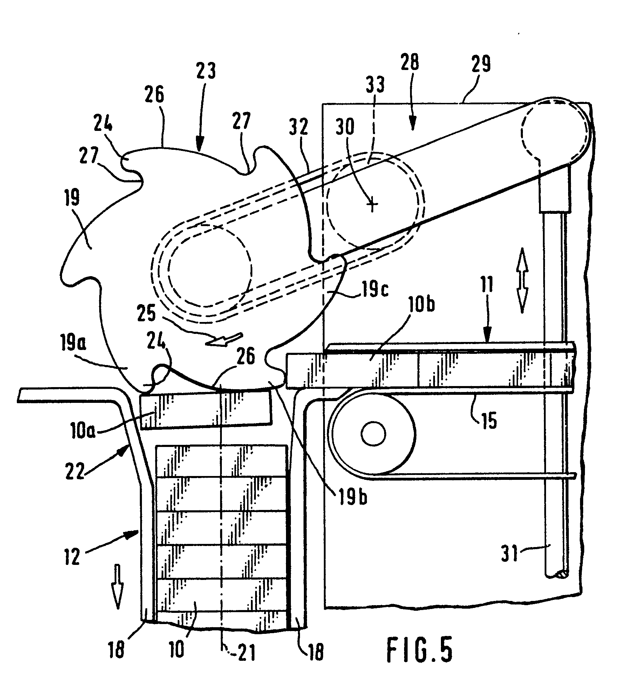

Die Zuförderbahn 11 ist bei dem vorliegenden Ausführungsbeispiel als Bandförderer 15 ausgebildet mit einer Oberführung 16. Die Packungen 10 werden durch den Bandförderer 15 bis an einen Rand bzw. zur Seite gerichteten Flansch 17 einer aufrechten Turmwandung 18 gefördert. In diesem Bereich läuft die jeweils vornliegende Packung 10a der Packungsreihe gegen einen bewegbaren Anschlag 19a. Dieser wird im wesentlichen in Richtung der Bewegung der Packung 10 mitlaufend bewegt, allerdings mit einer (geringfügig) niedrigeren linearen Geschwindigkeit als die Packung 10a. Diese wird so hinsichtlich der Relativstellung durch den Anschlag 19a geführt unter Anlage einer vorderen Stirnfläche 20 an diesem. Die Packung 10a wird bis in eine aussermittige Relativstellung zum Packungsturm 12, nämlich zu einer aufrechten Mittelebene 21 desselben, gefördert — über diese Mittelebene 21 hinaus (Fig. 5). Die Turmwandungen 18 sind zu diesem Zweck im Bereich der Eintrittsöffnung 14 mit grösserer Querabmessung ausgebildet, nämlich mit einem tricherförmigen Einlauf 22.

Nach Erreichung der etwa der Fig. 5 entsprechenden Relativstellung wird die vordere Packung 10a in den Packungsturm 12 abgesenkt. Die im oberen Bereich konvergierenden Turmwandungen 18 bzw. der trichterförmige Einlauf 22 bewirken dabei eine Ausrichtung der Packung 10a auf die Mittelebene 21.

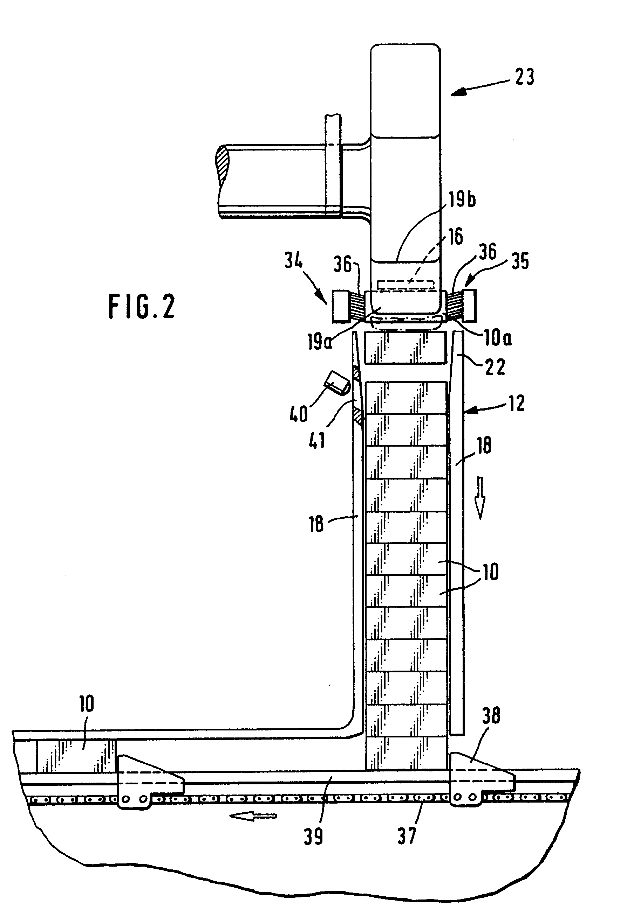

Der Anschlag 19a ist an einem umlaufenden Anschlagträger angebracht, im vorliegenden Fall an einer Anschlagscheibe 23. Diese hat eine Querabmessung (Dicke), die annähernd der Innenbreite des Packungsturms 12 in der zugeordneten Richtung (Fig. 2) entspricht. Längs des Umfangs ist die Anschlagscheibe 23 mit einer Mehrzahl von in gleichen Abständen voneinander angeordneten Anschlägen 19a, 19b, 19c ... versehen. Die Anschläge 19a, 19b ... sind in Seitenansicht annähernd sägezahnförmig ausgebildet mit einer der jeweils zulaufenden Packung 10, 10a zugekehrten, vorspringenden Nase 24, an der die Packung 10a mit ihrer vorderen Stirnfläche 20 unmittelbar Anlage erhält. Die Nase 24 ist als in bezug auf die Drehrichtung der Anschlagscheibe 23 (Pfeil 25) nach rückwärts weisender Vorsprung. An die Nase 24 schliesst jeweils auf der radial aussenliegenden Seite ein im vorliegenden Fall bogenförmig gestalteter Rücken 26 des Anschlags 19a, 19b ... an. Dieser Rücken 26 geht bogenförmig in eine die Nase 24 an der Innenseite begrenzende ebenfalls bogenförmig ausgebildete Vertiefung 27 über.

Durch die vorstehende gestalterische Ausbildung der Anschläge 19a, 19b ... sowie durch deren Abstände in Umfangsrichtung bzw. in Förderrichtung der Packungen 10, 10a wird erreicht, dass ein jeweils nachfolgender Anschlag 19b in eine Position gelangt (Fig. 5), in der die nachfolgenden Packungen bzw. die dann vorliegende Packung 10b durch diesen Anschlag 19b erfasst wird. Die Packung 10a befindet sich mittlerweile in einer Stellung im Bereich der Eintrittsöffnung 14, versetzt zur Mittelebene 21, in der die Abwärtsbewegung in den Packungsturm 12 erfolgt.

Hierfür ist bei dem vorliegenden Ausführungsbeispiel ebenfalls der Anschlag 19a, 19b ... bzw. die Anschlagscheibe 23 vorgesehen. Der der Packung 10a zugeordnete Anschlag 19a ist inzwischen so weit bewegt worden, dass sich die Nase 24 längs der kreisbogenförmigen Bewegungsbahn in Aufwärtsbewegung befindet. Zugleich hat sich der Rücken 26 des nachfolgenden Anschlags 19b so weit nach unten bewegt, dass dieser in einen in bezug auf die Bewegungsrichtung rückwärtigen Bereich an der Oberseite der Packung 10a Anlage erhält (Fig. 5). Auch die Nase 24 des vorangehenden Anschlags 19a befindet sich etwa in gleicher Ebene, also an der Oberseite der Packung 10a. Durch Abwärtsbewegung der Anschlagscheibe 23 wird nunmehr die Packung 10a in den Packungsturm 12 eingeführt. Die Packung 10a wird dabei durch die Nase 24 des Anschlags 19a und den Rücken 26 des Anschlags 19b stabil und ohne Kippgefahr an der Oberseite erfasst.

Die Anschlagscheibe 23 ist zur Durchführung dieser Einschubbewegung auf- und abbewegbar gelagert, im vorliegenden Fall an einem zweiarmigen Schwenkhebel 28. Dieser ist an einer Tragplatte 29 des Maschinengestells mit einem Schwenklager 30 gelagert. Über eine auf- und abbewegbare Schubstange 31 werden Schwenkbewegungen des Schwenkhebels 28 bewirkt, die zu einer Auf- und Abbewegung der Anschlagscheibe 23 führen.

Ein Drehantrieb in Gestalt einer Antriebsscheibe 33 überträgt mittels eines (Zahn-)Riemens 32 die Drehbewegung auf die Anschlagscheibe 23. Die Antriebsscheibe 33 ist im Bereich des Schwenklagers 30 angebracht.

Die jeweils in Förderrichtung vornliegende Packung 10a wird im Bereich oberhalb der Eintrittsöffnung 14 — etwa in Höhe der Ebene der Zuförderbahn 11 — bis zum Einschub in den Packungsturm 12 lösbar gehalten. Zu diesem Zweck sind in Verlängerung der Zuförderbahn 11 auf beiden Seiten der Bewegungsbahn der Packung 10a seitliche Haltebacken 34 und 35 angeordnet. Diese sind bei dem gezeigten Ausführungsbeispiel auf der den Seitenflächen der Packungen 10, 10a ... zugekehrten Seite mit elastischen Haltemitteln versehen, im vorliegenden Fall mit Bürsten 36. Durch diese werden die Packungen schonend gehalten. Bei der Einschubbewegung der Packungen in den Packungsturm 12 durch die Anschlagscheibe 23 wird die jeweilige Packung 10a aus der Haltestellung zwischen den Bürsten 36 herausgedrückt.

Die in dem Packungsturm 12 in Dichtlage übereinanderliegend gesammelten Packungen 10 werden einzeln am unteren Ende des Packungsturms 12 in Richtung quer zur Zuförderbahn 11 durch den Abförderer 13 abtransportiert. Dieser ist im vorliegenden Fall als Kettenförderer 37 ausgebildet. Mitnehmer 38 erfassen jeweils die untere Packung 10 und transportieren diese ab. Der Packungsturm 12 endet deshalb mit entsprechendem Abstand überhalb einer Gleitbahn 39 für die Packungen.

Der Füllstand im Packungsturm 12 wird überwacht, und zwar durch eine Lichtschranke, die durch einen Sender 40 über eine Öffnung 41 in der Turmwandung 18 die jeweils obere Packung im Packungsturm 12 erfasst.

**Patentansprüche**

1. Vorrichtung zum Ablenken von Gegenständen, insbesondere Packungen (10), von einer Zuförderbahn (11) in eine Weiterförderbahn in Form eines abwärtsführenden Packungsturms (12), aus dem die Packungen (10) an der Unterseite über eine Abförderbahn (13, 37) abtransportierbar sind, wobei die Packungen (10) von der Zuförderbahn (11) gegen einen im Bereich einer Eintrittsöffnung (14) des Packungsturms (12) bewegten Anschlag (19a, 19b ...) förderbar sind, der in Bewegungsrichtung der Packung (10a) zeitweilig mit dieser mitläuft, wobei die jeweils vordere Packung (10a) an dem Anschlag (19a, 19b ...) anliegt und wobei der Anschlag (19a, 19b ...) am Umfang einer umlaufend angetriebenen Anschlagscheibe (23) angeordnet ist, dadurch gekennzeichnet, dass Seitenhalter (34, 35) derart angebracht sind, dass die Packung (10a) im Bereich der Eintrittsöffnung (14) in den nach abwärts führenden Packungsturm (12) im wesentlichen in der Ebene der Zuförderbahn (11) bis zum Einführen in den Packungsturm (12) gehalten ist, und dass die Anschlagscheibe (23) auf- und abbewegbar ist, so dass beim Abbewegen der Anschlagscheibe (23) die von den Seitenhaltern (34, 35) gehaltene Packung (10a) aus der Halterung herausschiebbar und in den Packungsturm (12) einführbar ist.

2. Vorrichtung nach Anspruch 1, dadurch gekennzeichnet, dass die Seitenhalter elastische Haltebacken (34, 35) sind, insbesondere mit quergerichteten Bürsten (36), die die Packung (10a) unter Reibschluss an ihren Seitenflächen erfassen.

3. Vorrichtung nach Anspruch 1 oder 2, dadurch gekennzeichnet, dass mehrere Anschläge (19a, 19b ...) mit Abstand voneinander längs des Umfangs der Anschlagscheibe (23) gleichmässig verteilt angeordnet sind.

4. Vorrichtung nach einem der vorhergehenden Ansprüche, dadurch gekennzeichnet, dass der Anschlag (19a, 19b ...) sägezahnartig ausgebildet ist mit der jeweiligen Packung (10, 10a, 10b) entgegengerichteter, abgerundeter Nase (24) und an diese in Drehrichtung anschliessendem bogenförmigen Rücken (26).

5. Vorrichtung nach einem der vorhergehenden Ansprüche, dadurch gekennzeichnet, dass der bogenförmige Rücken (26) eines jeweils nachfolgenden Anschlags (19b ...) auf der Oberseite der Packung (10a) im Bereich der Eintrittsöffnung (10) aufliegt, bevor durch Abwärtsbewegung der Anschlagscheibe (23) die Packung (10a) in den-Packungsturm (12) absenkbar ist.

6. Vorrichtung nach Anspruch 5, dadurch ge-kennzeichnet, dass der Abstand der Anschläge (19a, 19b, 19c ...) am Umfang der Anschlagscheibe (23) so bemessen ist, dass bei der Abwärtsbewegung der Anschlagscheibe (23) der Anschlag (19a) mit seiner Nase (24b) und der nachfolgende Anschlag (19b) mit seinem Rücken (26) an der Oberseite der Packung (10a) anliegen.

7. Vorrichtung nach einem der vorhergehenden Ansprüche, dadurch gekennzeichnet, dass die Anschlagscheibe (23) an einem zweiarmigen Schwenkhebel (28) angebracht ist.

8. Vorrichtung nach Anspruch 7, dadurch gekennzeichnet, dass im Bereich eines Schwenklagers (30) des Schwenkhebels (28) eine Antriebsscheibe (33) für einen (Zahn-)Riemen (32) zum Drehantrieb der Anschlagscheibe (23) gelagert ist.

9. Vorrichtung nach einem der vorhergehenden Ansprüche, dadurch gekennzeichnet, dass die am unteren Ende des Packungsturms (12) anschliessende, im wesentlichen in horizontaler Ebene verlaufende Abförderbahn (13, 37) quer zur Förderrichtung der Zuförderbahn (11) gerichtet ist.

10. Vorrichtung nach einem der vorhergehenden Ansprüche, dadurch gekennzeichnet, dass der Packungsturm (12) im Bereich der Eintrittsöffnung (14) als trichterförmiger Einlauf (22) ausgebildet ist.

## Claims

1. Apparatus for deflecting objects, in particular packs (10), from a supply path (11) into a further conveying path in the form of a pack tower (12) leading downwards, from which the packs (10) can be discharged on the underside by way of a discharge path (13, 37), the packs (10) being able to be conveyed from the supply path (11) against a stop (19a, 19b) moving in the region of an inlet opening (14) of the pack tower (12), which stop travels in the direction of movement of the pack (10a) temporarily with the latter, the front pack (10a) respectively bearing against the stop (19a, 19b ...) and the stop (19a, 19b) being located on the periphery of a rotating stop disc (23) characterised in that lateral holders (34, 35) are provided so that in the region of the inlet opening (14) into the pack tower (12) leading downwards, the pack (10a) is held substantially in the plane of the supply path (11) until it is introduced into the pack tower (12) and that the stop disc (23) can be moved up and down, so that when the stop disc (23) is moved down, the pack (10a) held by the lateral holders (34, 35) can be slid out of the holders and can be introduced into the pack tower (12).

2. Apparatus according to Claim 1, characterised in that the lateral holders are resilient holding jaws (34, 35), in particular with transversely directed brushes (36), which grip the pack (10a) with friction-al resistance on its side faces.

3. Apparatus according to Claim 1 or 2, characterised in that several stops (19a, 19b ...) are uniformly distributed at a distance apart along the periphery of the stop disc (23).

4. Apparatus according to one of the preceding Claims, characterised in that the stop (19a, 19b ...) is constructed in the form of a saw tooth with a rounded lug (24) directed towards the respective pack (10, 10a, 10b) and a curved back (26) following the lug in the direction of rotation.

5. Apparatus according to one of the preceding Claims, characterised in that the curved back (26) of each subsequent stop (19b ...) rests on the upper side of a pack (10a) in the region of the inlet opening (10), before the pack (10a) is able to be lowered into the pack tower (12) due to the downwards movement of the stop disc (23).

6. Apparatus according to Claim 5, characterised in that the spacing of the stops (19a, 19b, 19c ...) on the periphery of the stop disc (23) is such that during the downwards movement of the stop disc (23), the stop (19a) with its lug (24b) and the following stop (19b) with its back (26) rest on the upper side of the pack (10a).

7. Apparatus according to one of the preceding Claims, characterised in that the stop disc (23) is located on a two-armed swinging lever (28).

8. Apparatus according to Claim 7, characterised in that mounted in the region of a swivel bearing (30) of the swinging lever (28) is a drive disc (33) for a (toothed) belt (32) for the rotary drive of the stop disc (23).

9. Apparatus according to one of the preceding Claims, characterised in that the discharge path (13, 37) adjoining the lower end of the pack tower (12) and extending substantially in a horizontal plane is directed transversely with respect to the conveying direction of the supply path (11).

10. Apparatus according to one of the preceding Claims, characterised in that in the region of the inlet opening (14), the pack turret (12) is constructed as a funnel shaped inlet (22).

## Revendications

1. Appareil pour faire passer des objets, en particulier des paquets (10) d'un transporteur d'amenée (11) dans un autre transporteur, en forme de tour d'empilage (12) descendante d'où les paquets (10) passent, à sa face inférieure, sur un transporteur d'évacuation (13, 37), les paquets (10) du transporteur d'amenée (11) étant amenés contre une butée (19a, 19b) mobile au voisinage d'un orifice d'entrée (14) de la tour d'empilage (12) et qui se déplace par intermittences dans la direction de mouvement du paquet (10a) et en même temps que lui, le paquet (10a) situé chaque fois en avant étant en contact avec la butée (19a-19b) et la butée (19a, 19b) étant située à la périphérie d'un disque de butée (23) entraîné en rotation, caractérisé par le fait que des supports latéraux (34, 35) sont disposés de façon que le paquet (10a), dans la zone de l'orifice d'entrée (14) dans la tour d'empilage (12), est maintenu sensiblement dans le plan du transporteur d'amenée (11) jusqu'à son introduction dans la tour d'empillage (12), et que le disque de butée (23) est soulevable et abaissable de manière que, lorsque le disque de butée (23) est abaissé, le paquet (10a) maintenu par les supports latéraux (34, 35) est expulsé de son moyen de retenue et pénètre dans la tour d'empillage (12).

2. Appareil selon la revendication 1, caractérisé par le fait que les supports latéraux sont des sabots de retenue élastiques (34, 35), notamment à brosses (36) orientées transversalement, qui retiennent le paquet (10a) par frottement entre leurs faces latérales.

3. Appareil selon la revendication 1 ou 2, caractérisé par le fait qu'une pluralité de butées (19a, 19b ...) sont réparties régulièrement écartées les unes des autres sur la périphérie du disque de butée (23).

4. Appareil selon l'une des revendications précédentes, caractérisé par le fait que la butée (19a, 19b ...) est en forme de dent de scie, à nez (24) arrondi dirigé à l'opposé de chaque paquet (10, 10a, 10b) et à dos (26) arqué, succédant, dans le sens de rotation, au dit nez.

5. Appareil selon l'une des revendications précédentes, caractérisé par le fait que le dos arqué (26) de chaque butée (19b ...) successive repose sur la face supérieure d'un paquet (10a) dans la zone de l'orifice d'entrée (10) avant que le paquet (10a) tombe dans la tour d'empilage (12) du fait de l'abaissement du disque de butée (23).

6. Appareil selon la revendication 5, caractérisé par le fait que l'écartement entre les butées (19a, 19b, 19c ...) à la périphérie du disque de butée (23) est fixé de manière que, lors de l'abaissement du disque de butée (23), la butée (19a), par son nez (24b) et la butée suivante (19b), par son dos (26), reposent sur la face supérieure du paquet (10a).

7. Appareil selon l'une des revendications précédentes, caractérisé par le fait que le disque de butée (23) est monté sur un levier pivotant (28) à deux bras.

8. Appareil selon la revendication 7, caractérisé par le fait qu'au voisinage d'un palier de pivotement (30) du levier pivotant (28) est monté un disque de commande (33) pour une courroie dentée (32), en vue de la commande en rotation du disque de butée (23).

9. Appareil selon l'une des revendications précédentes, caractérisé par le fait que le transporteur d'évacuation (13, 37), faisant suite à l'extrémité inférieure de la tour d'empilage (12) et circulant sensiblement dans un plan horizontal, est orienté transversalement à la direction de transport du transporteur d'amenée (11).

10. Appareil selon l'une des revendications précédentes, caractérisé par le fait que la tour d'empillage (12) possède, dans la zone de l'orifice d'entrée (14), une embouchure en forme de trémie.

FIG.1

FIG.2

FIG.3

FIG.4

FIG.5